Europäisches Patentamt

European Patent Office

Office européen des brevets

(11) Publication number: **0 450 235 A1**

# EUROPEAN PATENT APPLICATION

(21) Application number: 90314210.7

(51) Int. Cl.5: **C04B 35/00**

(22) Date of filing: 21.12.90

(30) Priority: 04.04.90 US 504483

(43) Date of publication of application:
09.10.91 Bulletin 91/41

(84) Designated Contracting States:
**DE FR GB IT NL**

(71) Applicant: GTE PRODUCTS CORPORATION
100 W. 10th Street
Wilmington, Delaware(US)

(72) Inventor: Ludwig, David C.
R.D. No.3, Box 72
Towanda, Pa 18848(US)

(74) Representative: Bubb, Antony John Allen et al
GEE & CO. Chancery House Chancery Lane
London WC2A 1QU(GB)

(54) Composition suitable for injection moulding of ceramic powders.

(57) A composition is disclosed which is suitable for injection molding of ceramic material. The composition comprises about 9% to about 20% by weight of a binder and the balance a ceramic material. The binder consists of about 6% to about 14% by weight of a fatty acid and the balance a hydrocarbon wax having a melting point of about 50°C to about 100°C.

Cross reference to related application

This application is related to application Attorney's Docket No. D-88-2-242, entitled "Composition Suitable For Injection Molding Of Metal, Metal Alloy, or Metal Carbide Powders", which is assigned to the same assignee as the present application and which is filed concurrently herewith.

This invention relates to compositions suitable for injection molding of ceramic powders which contain as a binder a hydrocarbon wax and a fatty acid. The binder of the present invention is easily obtained, is relatively uncomplicated as compared with prior known binders, and is as a result, therefore, safer, more economical, and more easily removed during the dewaxing and sintering operation of green articles made from the ceramic material than prior known binder systems. Use of the fatty acid results in essentially complete wetting of the ceramic material during compounding. This results in the resulting green article being uniform in composition throughout.

Sinterable materials may be formed into shapes by various processes. Injection molding is a process wherein a material can be formed into a shape by forcing the material into a mold or die by fluidizing the material and injecting the fluidized material into the mold by applying a pressure to the fluidized material. The injection molding process facilitates a rapid and repeated forming of a plurality of articles having a consistent shape with close dimensional tolerances. The injection molding process minimizes the amount of shaping or machining that may be required to produce a finished article.

Many problems are encountered in the injection molding process for particulate materials which require high solids to binder ratio. Some of the problems which make it difficult to make complex shapes of high solids to binder ratio compositions required in many sinterable materials such as ceramic materials, are low green strength of the articles as molded, segregation of the binder from the particulate material during molding and poor green body flexibility.

In addition to the above problems, many binder systems are comprised of various types of polymers, and exotic blends of materials that are removed by heat, solvents, and capillary action. The more complicated the binder system, the more complicated, and often more hazardous is the removal of the binder.

U.S. Patent 4,458,713 relates to a composition for injection molding which comprises a finely divided sinterable material and an organic binder comprising a hydrocarbon wax having a melting point of about 40°C to about 75°C and a volatilization temperature of about 150°C to about 450°C, about 5 to 15% by weight of a thermosetting resin having a thermosetting temperature of about 120°C to about 160°C, and a surfactant. This binder composition is relatively complicated. Generally this makes the binder harder to remove than a simpler binder would be because more components have to be removed and different temperatures are involved. There are problems associated with thermosetting resins such as the possibility of the resin setting up during compounding or curing at room temperature while standing. This leads to problems with reusing the sprues and runners and in reprocessing of scrap material.

In accordance with one aspect of the invention, there is provided a composition which is suitable for injection molding of ceramic material. The composition comprises about 9% to about 20% by weight of a binder and the balance a ceramic material. The binder consists of about 6% to about 14% by weight of a fatty acid and the balance a hydrocarbon wax having a melting point of about 50°C to about 100°C.

For a better understanding of the present invention, together with other and further objects, advantages and capabilities thereof, reference is made to the following disclosure and appended claims in connection with the above description of some of the aspects of the invention.

The present invention provides a composition suitable for injection molding of ceramic material which includes a relatively uncomplicated binder system made up of a hydrocarbon wax such as paraffin and a fatty acid. The binder is safe, easily obtained, economical, easily removed. Use of the fatty acid results in essentially complete wetting of the ceramic material during compounding. The composition is easily moldable.

The composition of the present invention is a ceramic material and an organic binder, the binder being made up of a hydrocarbon wax such as paraffin and a fatty acid.

The ceramic materials which are best suited to the practice of the present invention although the invention is not limited to these are finely divided sinterable materials such as silicon nitride powder of the type supplied by GTE Products Corporation designated as SN 502. The silicon nitride is ball milled with sintering aid powders such as yttria, typically about 6% by weight and alumina, typically about 2% by weight. The ceramic material can contain sintering aids such as yttria and alumina.

The ball milled mixture of silicon nitride and the sintering aids is preheated to remove adsorbed water.

The paraffin has a melting point of about 50°C to about 100°C. The paraffin wax is available commercially. Some preferred types of paraffin are supplied by Astor Chemical Co. under the designation 1865Q, by Fisher Chemical Co. under the designation P-21 , by Roger Reed Co. having a melting point of about 125°F to about 165°F, by Shell Oil Co. designated as Shell wax 120, and by Amoco Oil Co. designated as Parawax.

The fatty acid can be any type generally. The preferred fatty acids are oleic acid, stearic acid, and combinations of these. The fatty acid content serves as a surfactant and aids to producing a uniform intimate mixture of the ceramic powder and the binder.

The binder content in the composition is about 9% to about 20% by weight of the composition with about 12% to about 17% by weight being preferred. The binder itself is made up of about 6% to about 14% by weight of a fatty acid with about 9% to about 11% by weight being preferred with the balance being the wax.

The ceramic powder and the binder composition are compounded to form an intimate mixture. This is done by techniques known in the art. One preferred method, is by mixing the ceramic powder and binder components in an ABBE two bladed dispersion mixer. The binder components can be premixed before mixing with the wax. The mixing chamber is heated to normally about 80°C. Mixing is continued until the mixture has a homogeneous appearance. About 2 hours mixing time subsequent to the initial blending of ceramic material and binder materials is sufficient. At this point a vacuum is applied and the mixing is continued for about an additional 45 minutes to remove any entrapped air. The resulting mixture can be pelletized or granulated according to well known techniques to a relatively uniform particle size suitable as feed for an injection molding apparatus.

In injection molding applications, the molding is accomplished by known techniques. Injection molding is usually carried out utilizing the transfer method or the direct injection method. In the transfer method a hydraulic press forces the material from a heated storage chamber, by means of a plunger, through sprues or runners, into a mold. In the direct injection method, the heated mixture is forced directly into the mold, through runners and gates, by either a hydraulic plunger or by reciprocating screw equipment. Either method can be utilized.

To more fully illustrate this invention, the following non-limiting example is presented.

Example

When green articles are formed by injection from a ceramic material using the binder of the present invention, the binder is removed, for example, in a about 36 hours, whereas the green articles formed in the same manner with the same ceramic material using a resin-containing binder are removed in about 60 hours.

While there has been shown and described what are at present considered the preferred embodiments of the invention, it will be obvious to those skilled in the art that various changes and modifications may be made therein without departing from the scope of the invention as defined by the appended claims.

Claims

1. A composition suitable for injection molding of ceramic material, said composition comprising about 9% to about 20% by weight of a binder and the balance a ceramic material, said binder consisting of about 6% to about 14% by weight of a fatty acid and the balance a hydrocarbon wax having a melting point of about 50°C to about 100°C.

2. A composition according to claim 1 wherein said hydrocarbon wax comprises a paraffin wax.

3. A composition according to claim 1 or 2 wherein said fatty acid is stearic acid, oleic acid, or a combination thereof.

4. A composition according to claim 3 wherein the fatty acid is about 9% to about 11% by weight of said binder.

## DOCUMENTS CONSIDERED TO BE RELEVANT

EP 90314210.7

| Category | Citation of document with indication, where appropriate, of relevant passages | Relevant to claim | CLASSIFICATION OF THE APPLICATION (Int. Cl.5) |
|---|---|---|---|
| X | DE - A1 - 3 507 804 (NGK INSULATORS LTD) * Page 9, lines 25-31 * | 1-4 | C 04 B 35/00 |
| D,Y | US - A - 4 456 713 (FRENCH et al.) * Totality * | 1-4 | |

TECHNICAL FIELDS
SEARCHED (Int. Cl.5)

C 04 B

The present search report has been drawn up for all claims

| Place of search | Date of completion of the search | Examiner |
|---|---|---|
| VIENNA | 19-06-1991 | BECK |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)